# EUROPÄISCHE PATENTSCHRIFT

(11) **EP 2 707 575 B1**
(45) Veröffentlichungstag und Bekanntmachung des Hinweises auf die Patenterteilung: **24.06.2015**
(21) Anmeldenummer: 12707550.5
(22) Anmeldetag: 02.03.2012
(51) Int. Cl.: F01D 5/12, F01D 5/14, F01D 5/18, F01D 17/16, F02C 6/12

(54) **VARIABLE TURBINEN-/VERDICHTERGEOMETRIE**
VARIABLE TURBINE/COMPRESSOR GEOMETRY
GÉOMÉTRIE DE TURBINE/COMPRESSEUR VARIABLE

(30) Priorität: 13.05.2011 DE 102011075794
(43) Veröffentlichungstag der Anmeldung: 19.03.2014
(73) Patentinhaber: Bosch Mahle Turbo Systems GmbH & Co. KG, 70376 Stuttgart (DE)
(72) Erfinder: LAUBENDER, Jochen, 85051 Ingolstadt (DE); KRETH, Jens, 71739 Oberriexingen (DE)
(74) Vertreter: BRP Renaud & Partner mbB Rechtsanwälte Patentanwälte Steuerberater
(86) Internationale Anmeldenummer: PCT/EP2012/053608
(87) Internationale Veröffentlichungsnummer: WO 2012/156110

(56) Entgegenhaltungen:
- EP-A2- 1 884 626
- GB-A- 830 907
- GB-A- 2 328 723
- JP-A- 7 150 906
- US-A- 3 645 645

## Beschreibung

Die vorliegende Erfindung betrifft eine variable Turbinen-/Verdichtergeometrie, für einen Abgasturbolader einer Brennkraftmaschine, gemäß dem Oberbegriff des Anspruchs 1. Die Erfindung betrifft außerdem eine Ladeeinrichtung mit einer derartigen variablen Turbinen-/Verdichtergeometrie sowie eine dafür ausgestattete Leitschaufel.

Ladeeinrichtungen sind insbesondere bei Kraftfahrzeugen moderner Bauart häufig verwendete Einrichtungen zur Leistungssteigerung von Brennkraftmaschinen, wobei bei einer als Abgasturbolader ausgebildeten Ladeeinrichtung ein Abgas der Brennkraftmaschine eine Turbine der Ladeeinrichtung antreibt und über diese ein Verdichterrad dreht, so dass der Verdichter der Brennkraftmaschine komprimierte Ladeluft zuführen kann. Zur Regulierung der Leistung derartiger Ladeeinrichtungen wird oftmals eine variable Turbinen-/Verdichtergeometrie eingesetzt, die über eine Änderung der Stellung der einzelnen Leitschaufeln beispielsweise einen Abgaszustrom zur Turbine steuert bzw. regelt.

Bei bekannten variablen Turbinen-/Verdichtergeometrien, die üblicherweise in einem Schaufellagering drehbar gelagerte Leitschaufeln aufweisen, kommt es aufgrund von auf die Leitschaufeln einwirkenden Axialkräften zu Reibungskräften zwischen den Leitschaufeln und dem Schaufellagerring bzw. zwischen den Leitschaufeln und einer diese abdeckenden Deckscheibe. Die hierbei auftretenden Reibungskräfte führen nicht nur zu einer erhöhten Hysterese und damit einem schwierigen Regelverhalten des Abgasturboladers, sondern beeinträchtigen zudem auch die Lebensdauer der variablen Turbinen-/Verdichtergeometrie.

Eine gattungsgemäße variable Turbinen-/Verdichtergeometrie ist beispielsweise aus der EP 1 303 683 B1 und der US 3 645 645 bekannt.

Die vorliegende Erfindung beschäftigt sich daher mit dem Problem, für eine variable Turbinen-/Verdichtergeometrie der gattungsgemäßen Art eine verbesserte oder zumindest eine alternative Ausführungsform anzugeben, die sich insbesondere durch ein verbessertes Regelverhalten sowie eine gesteigerte Lebensdauer auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zur axialen Lagerung von Leitschaufeln in einem Schaufellagerring ein Gas-, das heißt Luftpolster vorzusehen, welches eine Reibung zwischen den Leitschaufeln und dem Schaufellagerring und/oder zwischen den Leitschaufeln und einer diese abdeckenden Deckscheibe zumindest reduziert. Die Deckscheibe ist dabei stirnseitig der Leitschaufeln angeordnet. Erfindungsgemäß ist dabei zumindest eine der Leitschaufeln von wenigstens einem Gasleitkanal durchzogen, der an einer Profilnase zumindest eine Einlassöffnung und an der zur Deckscheibe gerichteten Stirnseite bzw. an der zum Schaufellagerring gerichteten Unterseite eine Auslassöffnung aufweist und dadurch beim Betrieb der variablen Turbinen-Nerdichtergeometrie, das heißt bei einem Anströmen der Leitschaufeln, an der Stirnseite und/oder an der Unterseite ein die Reibung reduzierendes Gaspolster, insbesondere ein Luftpolster, erzeugt. Beim Betrieb der variablen Turbinen-/Verdichtergeometrie werden somit die Leitschaufeln über die Profilnase angeströmt, wobei ein Teil des angeströmten Gases in die zumindest eine Einlassöffnung eindringt und durch den Gasleitkanal zur zugehörigen Auslassöffnung geleitet wird, um dann dort zwischen der Leitschaufel und dem Schaufellagerring bzw. der Deckscheibe das die Reibung reduzierende (Luft-)polster zu erzeugen. Mit der erfindungsgemäßen Leitschaufel ist es somit möglich, eine schwimmende Lagerung der einzelnen Leitschaufeln auf konstruktiv besonders einfache aber effektive Weise zu erzielen, wodurch das bisher von den aus dem Stand der Technik bekannten variablen Turbinen-/Verdichtergeometrien bekannte Hystereseverhalten nahezu ausgeschaltet und zudem die Lebensdauer der variablen Turbinen-/Verdichtergeometrie deutlich gesteigert werden kann.

Bei einer vorteilhaften Weiterbildung der erfindungsgemäßen Lösung, weist zumindest eine der Leitschaufeln zwei Gasleitkanäle auf, von denen einer zu der an der Stirnseite angeordneten Auslassöffnung und der andere zu der an der Unterseite der Leitschaufel angeordneten Auslassöffnung führt. Durch die beiden Gasleitkanäle ist somit sowohl eine Luftlagerung der Leitschaufeln hinsichtlich des Schaufellagerrings als auch hinsichtlich der Deckscheibe möglich, wodurch sowohl die Reibung der Leitschaufel im Bereich der Deckscheibe als auch im Bereich des Schaufellagerrings reduziert, vorzugsweise sogar gänzlich eliminiert werden kann. Dabei ist selbstverständlich denkbar, dass die beiden Gasleitkanäle eine gemeinsame oder zwei separate Einlassöffnungen aufweisen, wobei im ersten Fall die Gasleitkanäle von einer gemeinsamen Einlassöffnung gespeist werden.

Zweckmäßig weist zumindest eine Leitschaufel an ihrer Stirnseite und/oder an ihrer Unterseite eine taschenförmige und umrandete Ausnehmung auf, die das Luftpolster begrenzt. Die taschenförmige Ausnehmung bietet somit einen Aufnahmeraum für das aus der Auslassöffnung ausströmende Gas sowie einen Sammelraum für dasselbe, wobei ein Abfließen des Gases aus diesem Sammelraum lediglich über den Rand erfolgen kann, so dass die Leitschaufeln in Bezug auf die Deckscheibe bzw. den Schaufellagerring ähnlich eines Luftkissenfahrzeuges schwebt und dadurch vorzugsweise mit diesem/dieser nicht in Kontakt kommt.

Bei einer weiteren vorteilhaften Ausführungsform der erfindungsgemäßen Lösung, sind die Gasleitkanäle und/oder die Ausnehmungen an den Leitschaufeln mittels Fräsen, Erodieren, Lasern, Bohren oder Ätzen hergestellt. Bereits die Aufzählung der vorgenannten Herstellungsverfahren lässt die Vielfältigkeit der Herstellungsmöglichkeiten erahnen, wobei die Wahl des individuellen Herstellungsverfahrens nach konstruktiven bzw. fertigungstechnischen oder wirtschaftlichen Überlegungen vorzunehmen ist. Sämtliche der genannten Herstellungsverfahren ermöglicht eine äußerst exakte und zudem kostengünstige Herstellung der entsprechenden Ausnehmungen bzw. der entsprechenden Gasleitkanäle, wodurch eine einerseits qualitativ hochwertige und andererseits kostengünstige Fertigung der Leitschaufeln ermöglicht wird.

Bei einer weiteren vorteilhaften Ausführungsform der erfindungsgemäßen Lösung, ist zumindest eine der Leitschaufeln mittels Schmiedeverfahren, Gussverfahren, Sinterverfahren, MIM (Metal Injection Molding) hergestellt. Das MIM-Verfahren ist dabei eine Unterart des Pulverspritzgießverfahrens, welchem ein mit einem Binder versehenes Metall Pulver in einem Spritzgussprozess verarbeitet wird. Der Binder wird anschließend entfernt, wodurch es möglich wird, komplex geformte Teile in größeren Stückzahlen mit äußerst geringen Fertigungstoleranzen herzustellen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1a: eine Ansicht auf eine erfindungsgemäße variable Turbinen-/ Verdichtergeometrie mit einer erfindungsgemäßen Leitschaufel,
- Fig. 1b: eine Ansicht auf eine weitere mögliche Ausführungsform der erfindungsgemäßen Leitschaufel,
- Fig. 2: eine Darstellung wie in Fig. 1, jedoch aus einer anderen Ansicht.

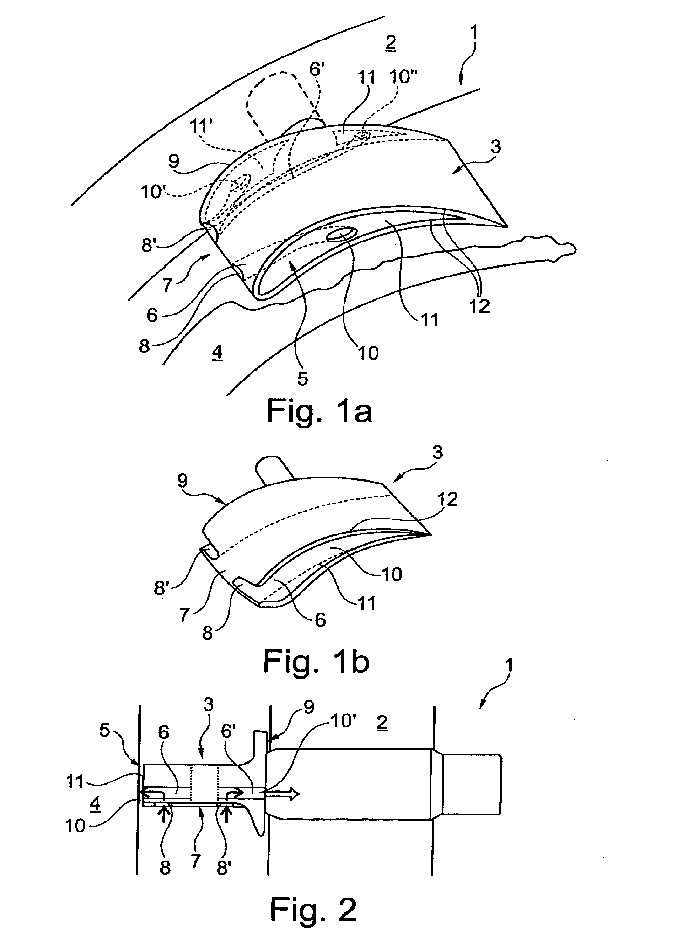

Entsprechend den Figuren 1 und 2, weist eine erfindungsgemäße variable Turbinen-/Verdichtergeometrie 1, insbesondere für einen Abgasturbolader einer Brennkraftmaschine, vorzugsweise in einem Kraftfahrzeug, einen Schaufellagerring 2 mit darin gelagerten Leitschaufeln 3 auf. Stirnseitig der Leitschaufeln 3 ist dabei eine Deckscheibe 4 angeordnet, die gemäß der Figur 1 lediglich teilweise dargestellt ist, um insbesondere eine zur Deckscheibe 4 hin gerichtete Stirnseite 5 der Leitschaufel 3 besser darstellen zu können. Erfindungsgemäß ist nun zumindest eine Leitschaufel 3 von wenigstens einem Gasleitkanal 6, der prinzipiell als Luftleitkanal ausgebildet sein kann, durchzogen, der an einer Profilnase 7 zumindest eine Einlassöffnung 8, 8' und an der zur Deckscheibe 4 ausgerichteten Stirnseite 5 und/oder an einer zum Schaufellagerring 2 hin gerichteten Unterseite 9 eine Auslassöffnung 10, 10', 10" aufweist und dadurch beim Betrieb an der Stirnseite 5 und/oder an der Unterseite 9 ein eine Reibung reduzierendes Gaspolster erzeugt.

Selbstverständlich kann die erfindungsgemäße Leitschaufel 3, wie dies gemäß der Figur 1 gezeigt ist, auch zwei separate Gasleitkanäle 6, 6' aufweisen, von denen ein Gasleitkanal 6 zu der an der Stirnseite 5 angeordneten Auslassöffnung 10 und der andere Gasleitkanal 6' zu der an der Unterseite 9 angeordneten Auslassöffnung 10', 10" führt. Die beiden Gasleitkanäle 6, 6' können dabei eine gemeinsame oder aber wie dies gemäß der Figur 1 dargestellt ist, zwei separate Einlassöffnungen 8, 8' aufweisen, die sich auch über die gesamte Breite der Profilnase 7 der Leitschaufel 3 erstrecken kann. Insbesondere kann dies bedeuten, dass an dieser Stelle eine Umrandung 12 einer taschenförmigen Ausnehmung 11,11' unterbrochen sein kann.

Betrachtet man insbesondere die Figur 1a, so kann man erkennen, dass die Leitschaufel 3 an ihrer Stirnseite 5 und an ihrer Unterseite 9 eine taschenförmige und umrandete Ausnehmung 11, 11' aufweist, die das beim Betrieb der variablen Turbinen-/Verdichtergeometrie 1 entstehende Luftpolster begrenzt. Auf der Unterseite 9 der Leitschaufel 3 sind dabei zwei voneinander getrennte Ausnehmungen 11 und 11' vorgesehen, die beide vom Gasleitkanal 6' luft- bzw. gasversorgt sind. Selbstverständlich können dabei die beiden Ausnehmungen 11, 11' auch zusammenhängend ausgebildet sein. Die taschenförmige Ausnehmung 11, 11' kann sich dabei über die gesamte Länge der Leitschaufel 3 erstrecken oder aber nur über einen Teil derselben.

In Fig. 1b ist eine Leitschaufel gezeigt, bei der die Einlassöffnungen 8,8' zur Stirnseite 5 bzw. zur Unterseite 9 hin offen sind. Bei einer derartigen Leitschaufel 3 ist der Gasleitkanal 6,6' sowie die Auslassöffnungen 10,10' zugleich durch die Ausnehmung 11,11' gebildet. Die Einlassöffnungen 8,8' durchbrechen in diesem Fall die Umrandung 12 der Ausnehmung 11,11'. Der Gasleitkanal 6,6' ist in diesem Fall als offener Kanal ausgebildet.

Die Gasleitkanäle 6, 6' und/oder die Ausnehmung 11, 11' können beispielsweise mittels Fräsen, Erodieren, Lasern, Bohren oder Ätzen hergestellt werden, wobei sämtliche aufgezählten Herstellungsverfahren bereits erahnen lassen, wie flexibel ein Herstellungsprozess gewählt werden kann. Die zumindest eine Einlassöffnung 8, 8' sowie die zugehörigen Auslassöffnungen 10, 10', 10" können einen eckigen Querschnitt (vgl. Figur 2) oder aber einen elliptischen bzw. runden Querschnitt aufweisen. Hergestellt werden kann die Leitschaufel 3 beispielsweise mittels eines Schmiedeverfahrens, eines Gussverfahrens, eines Sinterverfahrens, oder eines Pulverspritzgießverfahrens, insbesondere eines Metal Injection Molding-Verfahrens (MIM).

Mit der erfindungsgemäßen Leitschaufel 3 ist es möglich, während des Betriebs ein auf der Stirnseite 5 und/oder auf der Unterseite 9 ausströmendes Gaspolster (Luftpolster) zu erzeugen, welches die Leitschaufel 3 hinsichtlich des Schaufellagerrings 2 und hinsichtlich der Deckscheibe 4 auf einem Luftpolster lagert und dadurch einen direkten Kontakt zwischen Leitschaufel 3 und Schaufellagerring 2 bzw. Deckscheibe 4 unterbindet. Die Luftlagerung reduziert dabei insbesondere ein sehr auftretendes Hystereseverhalten und erhöht zudem die Lebensdauer signifikant.

## Patentansprüche

1. Variable Turbinen-/Verdichtergeometrie (1), für einen Abgasturbolader einer Brennkraftmaschine eines Kraftfahrzeuges, mit einem Schaufellagerring (2) sowie drehbar darin gelagerten Leitschaufeln (3) und einer Deckscheibe (4), die stirnseitig der Leitschaufeln (3) angeordnet ist,
**dadurch gekennzeichnet,**
**dass** zumindest eine Leitschaufel (3) von wenigstens einem Gasleitkanal (6,6') durchzogen ist, der an einer Profilnase (7) zumindest eine Einlassöffnung (8,8') und an der zur Deckscheibe (4) gerichteten Stirnseite (5) und/oder an der zum Schaufellagerring (2) gerichteten Unterseite (9) eine Auslassöffnung (10,10',10") aufweist und dadurch beim Betrieb an der Stirnseite (5) und/oder an der Unterseite (9) ein eine Reibung reduzierendes Luftpolster erzeugt.

2. Variable Turbinen-/Verdichtergeometrie nach Anspruch 1,
**dadurch gekennzeichnet,**
**dass** zumindest eine Leitschaufel (3) zwei Gasleitkanäle (6,6') aufweist, von denen einer zu der an der Stirnseite (5) angeordneten Auslassöffnung (10) und der andere zu der an der Unterseite (9) angeordneten Auslassöffnung (10',10") führt.

3. Variable Turbinen-/Verdichtergeometrie nach Anspruch 2,
**dadurch gekennzeichnet,**
**dass** die beiden Gasleitkanäle (6,6') eine gemeinsame oder zwei separate Einlassöffnungen (8,8') aufweisen.

4. Variable Turbinen-/Verdichtergeometrie nach einem der Ansprüche 1 bis 3,
**dadurch gekennzeichnet,**
**dass** zumindest eine Leitschaufel (3) an ihrer Stirnseite (5) und/oder an ihrer Unterseite (9) wenigstens eine taschenförmige und umrandete Ausnehmung (11,11') aufweist, die das Luftpolster begrenzt.

5. Variable Turbinen-/Verdichtergeometrie nach Anspruch 4,
**dadurch gekennzeichnet,**
**dass** die Gasleitkanäle (6,6') und/oder die Ausnehmung (11,11') mittels Fräsen, Erodieren, Lasern, Bohren oder Ätzen hergestellt sind/ist.

6. Variable Turbinen-/Verdichtergeometrie nach einem der Ansprüche 1 bis 5,
**dadurch gekennzeichnet,**
**dass** die zumindest eine Einlassöffnung (8,8') einen eckigen, eine elliptischen oder eine runden Querschnitt aufweist.

7. Variable Turbinen-/Verdichtergeometrie nach einem der Ansprüche 1 bis 6,
**dadurch gekennzeichnet,**
**dass** zumindest eine Leitschaufel (3) mittels Schmiedeverfahren, Gussverfahren, Sinterverfahren MIM (Metal Injection Molding) hergestellt ist.

8. Variable Turbinen-/Verdichtergeometrie nach einem der Ansprüche 4 bis 7,
**dadurch gekennzeichnet,**
**dass** sich die taschenförmige Ausnehmung (11,11') zumindest teilweise über die Länge der Leitschaufel (3) erstreckt.

9. Ladeeinrichtung mit einer variablen Turbinen-/Verdichtergeometrie (1) nach einem der Ansprüche 1 bis 8.

10. Leitschaufel (3) für eine variable Turbinen-/Verdichtergeometrie (1) nach einem der Ansprüche 1 bis 8
**dadurch gekennzeichnet,**
**dass** die Leitschaufel (3) von wenigstens einem Gasleitkanal (6,6') durchzogen ist, der an einer Profilnase (7) zumindest eine Einlassöffnung (8,8') und an einer Stirnseite (5) und/oder an einer gegenüberliegenden Unterseite (9) eine Auslassöffnung (10,10',10") aufweist und dadurch beim Betrieb an der Stirnseite (5) und/oder an der Unterseite (9) ein die Reibung reduzierendes Luftpolster erzeugt.

## Claims

1. Variable turbine/compressor geometry (1) for an exhaust gas turbocharger of an internal combustion engine in a motor vehicle, comprising a blade bearing ring (2), guide blades (3) rotatably mounted therein and a cover disc (4) arranged on the end face of the guide blades (3),
**characterised in that** at least one gas guide channel (6, 6') runs through at least one guide blade (3) and comprises at least one inlet opening (8, 8') on a profile lug (7) and an outlet opening (10, 10', 10") on the end face (5) facing the cover disc (4) and/or on the bottom face (9) facing the blade bearing ring (2), and thus generates a friction-reducing air cushion on the end face (5) and/or on the bottom face (9) during operation.

2. Variable turbine/compressor geometry according to claim 1, **characterised in that** at least one guide blade (3) comprises two gas guide channels (6, 6'), one of which leads to the outlet opening (10) arranged on the end face (5) and the other of which leads to the outlet opening (10', 10") arranged on the bottom face (9).

3. Variable turbine/compressor geometry according to claim 2, **characterised in that** the two gas guide channels (6, 6') have one common or two separate inlet openings (8, 8').

4. Variable turbine/compressor geometry according to any of claims 1 to 3, **characterised in that** at least one guide blade (3) comprises, on its end face (5) and/or on its bottom face (9), at least one pocket-shaped recess (11, 11') which has a rim and delimits the air cushion.

5. Variable turbine/compressor geometry according to claim 4, **characterised in that** the gas guide channels (6, 6') and/or the recess (11, 11') is/are produced by means of milling, eroding, lasing, drilling, or etching.

6. Variable turbine/compressor geometry according to any of claims 1 to 5, **characterised in that** the at least one inlet opening (8, 8') has an angular, an elliptical or a round cross section.

7. Variable turbine/compressor geometry according to any of claims 1 to 6, **characterised in that** at least one guide blade (3) is produced by means of forging, casting and sintering (MIM - metal injection moulding).

8. Variable turbine/compressor geometry according to any of claims 4 to 7, **characterised in that** the pocket-shaped recess (11, 11') extends at least in part over the length of the guide blade (3).

9. Charging device comprising a variable turbine/compressor geometry (1) according to any of claims 1 to 8.

10. Guide blade (3) for a variable turbine/compressor geometry (1) according to any of claims 1 to 8, **characterised in that** at least one gas guide channel (6, 6') runs through the guide blade (3) and comprises at least one inlet opening (8, 8') on a profile lug (7) and/or an outlet opening (10, 10', 10") on an end face (5) and/or on an opposite bottom face (9), and thus generates a friction-reducing air cushion on the end face (5) and/or on the bottom face (9) during operation.

## Revendications

1. Géométrie turbine/compresseur variable (1) pour un turbocompresseur à gaz d'échappement d'un moteur à combustion interne d'un véhicule automobile, comprenant une couronne de montage d'aubes (2) ainsi que des aubes directrices (3) qui y sont montées à rotation et un plateau de recouvrement (4), qui est aménagé à l'avant des aubes directrices (3),
**caractérisée en ce que** :
au moins une aube directrice (3) est traversée par au moins un canal d'acheminement de gaz (6, 6'), qui présente au moins une ouverture d'admission (8, 8') sur un bec profilé (7) et une ouverture de décharge (10, 10', 10") sur la face avant (5) dirigée vers le plateau de recouvrement (4) et/ou sur la face inférieure (9) dirigée vers la couronne de montage d'aubes (2) et, de la sorte, est généré en service un coussin d'air réducteur de frottement sur la face avant (5) et/ou sur la face inférieure (9).

2. Géométrie turbine/compresseur variable selon la revendication 1, **caractérisée en ce que** :
au moins un aube directrice (3) présente deux canaux d'acheminement de gaz (6, 6') dont l'un conduit à une ouverture de décharge (10) ménagée sur la face avant (5) et l'autre mène à l'ouverture de décharge (10', 10") ménagée sur la face inférieure (9).

3. Géométrie turbine/compresseur variable selon la revendication 2, **caractérisée en ce que** :
les deux canaux d'acheminement de gaz (6, 6') présentent une ouverture d'admission commune ou deux ouvertures d'admission séparées (8, 8').

4. Géométrie turbine/compresseur variable selon l'une quelconque des revendications 1 à 3,
**caractérisée en ce que** :
au moins une aube directrice (3) présente sur sa face avant (5) et/ou sur sa face inférieure (9) au moins un évidement bordé et en forme de poche (11, 11') qui délimite le coussin d'air.

5. Géométrie turbine/compresseur variable selon la revendication 4, **caractérisée en ce que** :
les canaux d'acheminement de gaz (6, 6') et/ou l'évidement (11, 11') sont fabriqués par fraisage, érosion, traitement au laser, perforation ou gravure.

6. Géométrie turbine/compresseur variable selon l'une quelconque des revendications 1 à 5,
**caractérisée en ce que** :
la au moins une ouverture d'admission (8, 8') présente une section transversale anguleuse, elliptique ou ronde.

7. Géométrie turbine/compresseur variable selon l'une quelconque des revendications 1 à 6,
**caractérisée en ce que** :
au moins une aube directrice (3) est fabriquée par forgeage, par coulée ou par frittage MIM (Metal Injection Molding).

8. Géométrie turbine/compresseur variable selon l'une quelconque des revendications 4 à 7,
**caractérisée en ce que** :
l'évidement en forme de poche (11, 11') s'étend au moins en partie sur la longueur de l'aube directrice (3).

9. Dispositif de chargement avec une géométrie turbine/compresseur variable (1) selon l'une quelconque des revendications 1 à 8.

10. Aube directrice (3) pour une géométrie turbine/compresseur (1) variable selon l'une quelconque des revendications 1 à 8,
**caractérisée en ce que** :
l'aube directrice (3) est traversée par au moins un canal d'acheminement de gaz (6, 6') qui présente au moins une ouverture d'admission (8, 8') sur un bec profilé (7) et une ouverture de décharge (10, 10', 10") sur une face avant (5) et/ou sur une face inférieure (9) en regard de celle-ci et, de la sorte, est généré en service un coussin d'air réducteur de frottement sur la face avant (5) et/ou sur la face inférieure (9).
